# FASCICULE DE BREVET EUROPEEN

(11) **EP 1 449 469 B1**
(45) Date de publication et mention de la délivrance du brevet: **28.09.2005**
(21) Numéro de dépôt: 04356012.7
(22) Date de dépôt: 11.02.2004
(51) Int. Cl.: A47J 37/08

(54) **Grille-pain perfectionné**
Verbesserter Brotröster
Improved toaster

(30) Priorité: 19.02.2003 FR 0302043
(43) Date de publication de la demande: 25.08.2004
(73) Titulaire: SEB S.A., 69130 Ecully (FR)
(72) Inventeur: Houel, Jean-Pierre, 88120 Saint Amé (FR)
(74) Mandataire: Kiehl, Hubert

(56) Documents cités:
- CH-A- 236 003
- CH-A- 401 288
- DE-A- 2 025 525
- GB-A- 2 117 627
- US-A- 3 483 814
- US-A- 4 986 173

## Description

La présente invention se rapporte au domaine technique des appareils électroménagers de cuisson du type grille-pain et concerne plus particulièrement une architecture particulière facilitant l'entretien dudit grille-pain.

L'entretien courant d'un grille-pain consiste le plus souvent à le débarrasser des miettes et autres résidus des produits mis à griller et/ou à réchauffer.

On connaît des grille-pain comportant un dispositif de récupération des miettes par un tiroir amovible ou une trappe dans le socle du grille-pain.

Ainsi, le document DE 1272471 décrit un grille-pain comportant un ramasse-miettes, sous la forme d'un tiroir coulissant ou d'une trappe relié à un interrupteur mettant hors service les éléments chauffants lors de l'ouverture de ladite trappe.

Un tel dispositif permet déjà de récupérer une quantité importante de miettes, mais, par le chauffage à haute température du pain lors des cycles de grillage, de nombreuses miettes ou résidus calcinés restent accrochés ou collés aux différentes parois en partie inférieure du grille-pain, parois difficilement accessibles, même en retirant la trappe ou le tiroir, lorsque le grille-pain en est pourvu. Le document DE-2025525 décrit le préambule de la revendication 1.

Le but de la présente invention est de remédier aux problèmes présentés par l'art antérieur en proposant un grille-pain comprenant un boîtier comportant notamment des parois latérales d'habillage du grille-pain, un socle en liaison avec le boîtier, ledit boîtier contenant un bâti formant une chambre de grillage verticale ouverte, d'une part dans la partie supérieure du boîtier, et d'autre part dans la partie inférieure du boîtier, en direction du socle, ladite chambre étant munie de moyens de chauffe situés à proximité de la chambre de grillage et reliés à un dispositif d'alimentation électrique et de contrôle desdits éléments chauffants, le socle étant amovible du boîtier, caractérisé en ce que le socle et le boîtier comportent chacun un élément en interaction l'un avec l'autre lorsque le boîtier est disposé sur le socle, la suppression de cette interaction par le retrait du boîtier du socle empêchant l'alimentation électrique des éléments chauffants.

Ainsi, en proposant un socle amovible du boîtier du grille-pain, il devient plus facile d'accéder, non seulement aux miettes qui tombent de la chambre de chauffe dans le socle, mais également aux résidus qui restent accrochés aux diverses parois aux alentours de la chambre de chauffe. Ceci est d'autant plus intéressant que l'amovibilité du socle permet d'accéder, par le fond du boîtier, à la partie inférieure de la chambre de chauffe, difficile d'accès dans cette spécificité d'architecture du grille-pain, permettant un nettoyage plus complet du grille-pain.

Par ailleurs, la présente invention est remarquable dans le sens où elle propose d'intégrer des sécurités mécaniques ou électriques, où la séparation du socle du boîtier entraîne l'impossibilité de l'alimentation des éléments chauffants. En effet, en facilitant l'accession à la chambre de chauffe, il est souhaitable de prévoir une ou plusieurs sécurités pour interdire le fonctionnement du grille-pain lorsque le boîtier n'est pas positionné sur le socle.

De plus, le socle assurant une fonction d'isolation thermique, un fonctionnement du grille-pain sans son socle pourrait entraîner une température élevée au niveau du plan de travail sur lequel serait posé le boîtier, pouvant conduire à une dégradation dudit plan de travail.

Selon certaines variantes de réalisation, il est possible de nettoyer le socle au lave-vaisselle.

Avantageusement, le socle comporte une zone en creux de collecte des miettes, ladite zone étant localisée en regard de la chambre de chauffe lorsque le boîtier est disposé sur le socle.

Selon un mode de réalisation de cette sécurité, l'élément disposé dans le boîtier peut occuper deux positions selon que le boîtier est disposé ou non sur le socle, l'une de ces positions étant localisée sur le trajet du chariot porte pain ou d'une pièce mobile avec ledit chariot, en empêchant ce dernier d'atteindre la partie basse du grille-pain, lorsque le boîtier est retiré du socle.

Ce mode de réalisation permet physiquement d'empêcher le chariot porte pain d'atteindre la position basse à un certain niveau où il est maintenu à cette position et où il déclenche un cycle de grillage, par l'alimentation des éléments chauffants. En n'atteignant pas cette position, il devient impossible d'alimenter les éléments chauffants.

Selon un autre mode de réalisation de cette sécurité, l'élément disposé dans le socle est un doigt, l'élément disposé dans le boîtier étant un interrupteur électrique inséré dans le circuit électrique d'alimentation des éléments chauffants.

Cette disposition permet d'agir directement sur le circuit électrique d'alimentation des éléments chauffants, ce qui permet une plus grande adaptation de ce dispositif aux différents modèles de grille-pain, indépendamment de l'agencement interne des différents éléments, et notamment du chariot porte pain.

Avantageusement, l'interrupteur se présente sous la forme d'un contacteur ouvrant le circuit d'alimentation des éléments chauffants dès que le socle est séparé du boîtier, ce qui offre une sécurité supplémentaire en arrêtant immédiatement l'alimentation électrique des éléments chauffants lorsque le boîtier est séparé du socle.

Ces deux variantes de réalisation s'inscrivent principalement dans des modes de réalisation où le socle ne comporte aucun élément électrique pour l'alimentation des éléments chauffants. Pour ces modes de réalisation, l'alimentation électrique des éléments chauffants est fournie par un cordon électrique relié aux éléments chauffants au niveau du boîtier du grille-pain.

Selon d'autres modes de réalisation, le socle comporte un connecteur électrique relié à une prise électrique pour sa connexion au réseau électrique, le connecteur étant de type mâle ou femelle et coopérant, lorsque le boîtier est disposé sur le socle, avec une partie complémentaire femelle ou mâle disposée sur le bâti ou le boîtier du grille-pain et reliée électriquement aux éléments chauffants.

Avantageusement, le circuit d'alimentation des éléments chauffants comporte une gâchette électrique verrouillant le boîtier sur le socle lorsque les éléments chauffants sont alimentés. Cette disposition, qui peut intervenir en tant que sécurité complémentaire, permet d'interdire toute déconnexion du socle du boîtier lorsque les éléments chauffants sont alimentés.

La présente invention sera mieux comprise à l'aide de la description qui va suivre, en référence aux figures annexées, données à titre d'exemple non limitatif, parmi lesquelles :
- la figure 1 est une vue de profil d'une première mise en oeuvre possible de l'invention, le socle étant séparé du boîtier,
- la figure 2 est une vue de face d'un premier mode de réalisation d'un grille-pain selon la première mise en oeuvre de l'invention, le boîtier étant agencé sur le socle,
- la figure 3 est une vue analogue à celle de la figure 2, où le socle est séparé du boîtier,
- la figure 4 est une vue de face d'un second mode de réalisation d'un grille-pain selon la première mise en oeuvre de l'invention, le boîtier étant agencé sur le socle,
- la figure 5 est une vue analogue à celle de la figure 4, où le socle est séparé du boîtier,
- les figures 6a et 6b présentent, dans une vue en coupe selon l'axe A-A de la figure 6c, un détail de construction de l'invention, selon sa première mise en oeuvre,
- la figure 6c est une vue schématique en perspective du détail de construction présenté aux figures 6a et 6b,
- la figure 7 présente une seconde mise en oeuvre possible de l'invention.

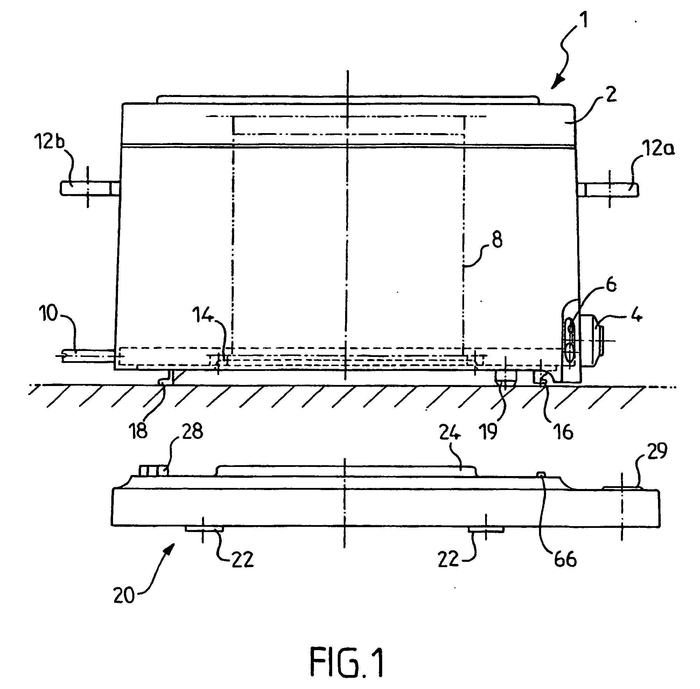

Ainsi, selon un premier exemple de mise en oeuvre de l'invention, tel que présenté figure 1, le grille-pain 1 possède un boîtier 2 à l'intérieur duquel est agencé un bâti définissant notamment une chambre de chauffe 8. Des éléments chauffants, non représentés, sont associés à cette chambre. La chambre possède une ouverture dans sa partie inférieure s'étendant sur sensiblement toute la surface de la chambre.

Le boîtier possède par ailleurs des poignées de préhension 12a, 12b sur les parois latérales du boîtier, la poignée 12a permettant également de descendre le chariot porte pain en position de grillage. Le grille-pain comporte également un bouton de réglage 4 du niveau de grillage souhaité du pain, ainsi que des commandes 6 de fonctions spéciales (par exemple éjection immédiate du pain, décongélation, ...).

Selon donc une première configuration, le boîtier comporte tout le circuit électrique d'alimentation des éléments chauffants, incluant le cordon 10 de raccordement au réseau.

Selon l'invention, le grille-pain possède un socle amovible 20 pouvant être déconnecté du boîtier.

Selon l'exemple présenté, le socle possède une légère forme proéminente 24 associée à une partie complémentaire 14 du boîtier, permettant le guidage et le positionnement correct du boîtier sur le socle lorsque cette opération est effectuée. Le socle est également partiellement évidé intérieurement en regard de la chambre de chauffe afin de présenter une zone 9 de collecte des miettes.

Le socle possède avantageusement quatre pieds 22. Ce peut être également le cas du boîtier, les pieds 18, 19 permettant de reposer le grille-pain sur le plan de travail lorsque le socle est séparé pour être nettoyé.

Avantageusement, un système de verrouillage mécanique permet de maintenir le boîtier sur le socle. A cette fin, un crochet 16 issu du bâti du boîtier à proximité d'une extrémité du boîtier que l'on nommera partie "arrière", peut coopérer avec un moyen de retenue localisé sur le socle, afin de maintenir fermement le boîtier sur le socle, tel qu'il sera expliqué ultérieurement.

Afin de maintenir la partie "avant" du boîtier sur le socle, le pied 18 présente un bec horizontal pouvant coopérer avec un moyen de retenue solidaire du socle et se présentant sous la forme d'un arceau 28.

Ainsi, lorsque l'utilisateur désire verrouiller le boîtier sur le socle, il incline ledit boîtier vers l'avant, de manière à insérer le bec du pied 18 sous l'arceau 28. Puis il abaisse la partie arrière du grille-pain jusqu'à ce que le crochet 16 se verrouille sur le moyen de retenue situé dans le socle.

Un bouton de déverrouillage 29 permet de libérer le crochet 16 du moyen de verrouillage, permettant à l'utilisateur de désolidariser le boîtier du socle par les opérations inverses à celles précédemment décrites.

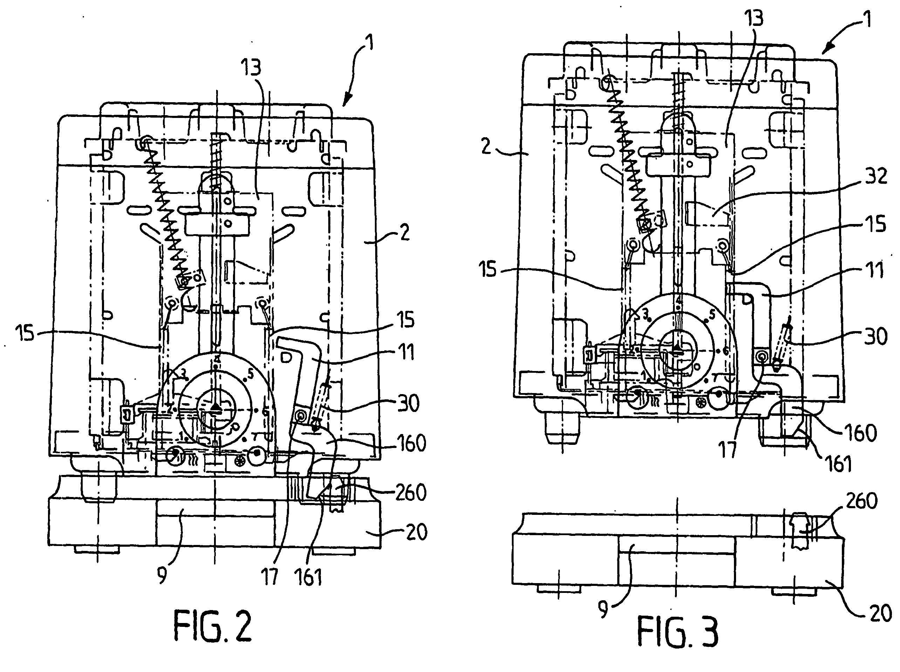

Selon un premier mode de mise en oeuvre de l'invention, tel que présenté aux figures 2 et 3, le grille-pain possède un dispositif mécanique de sécurité interdisant l'alimentation des éléments chauffants lorsque le socle est séparé du boîtier. Ainsi, le chariot porte pain est relié, au moins à l'une des ses extrémités, à un entraîneur 13 qui peut coulisser verticalement en étant guidé par des rainures 15.

Une pièce 160, liée au bâti du grille-pain, est articulée autour d'un axe 17 contre la force de rappel d'un ressort 30, et possède un bras 11 d'extension au delà de cet axe. Le socle 20 comporte un plot 260 d'interaction avec la pièce 160. Lorsque cette pièce 160 n'interagit pas avec le plot 260, le ressort de rappel maintient le bras 11 dans la position présentée figure 3 où le bras 11 est situé sur le trajet de l'entraîneur du chariot porte pain, interdisant ainsi à ce dernier d'atteindre la position basse de grillage. Or, dans ce mode particulier de réalisation du grille-pain, la fermeture du circuit électrique d'alimentation des éléments chauffants est réalisée par l'entraîneur, lorsque celui-ci est en position basse, une extension 32 de l'entraîneur fermant un interrupteur disposé dans le circuit électrique d'alimentation des éléments chauffants.

Lorsque le boîtier est positionné sur le socle, la coopération entre la pièce 160 et le plot 260, notamment par la pente 161 ménagée sur ladite pièce 160, permet au bras 11 de pivoter. Il s'écarte ainsi du trajet de l'entraîneur 13. Ce dernier peut alors coulisser pour atteindre la position basse de grillage et permettre l'alimentation des éléments chauffants. ,

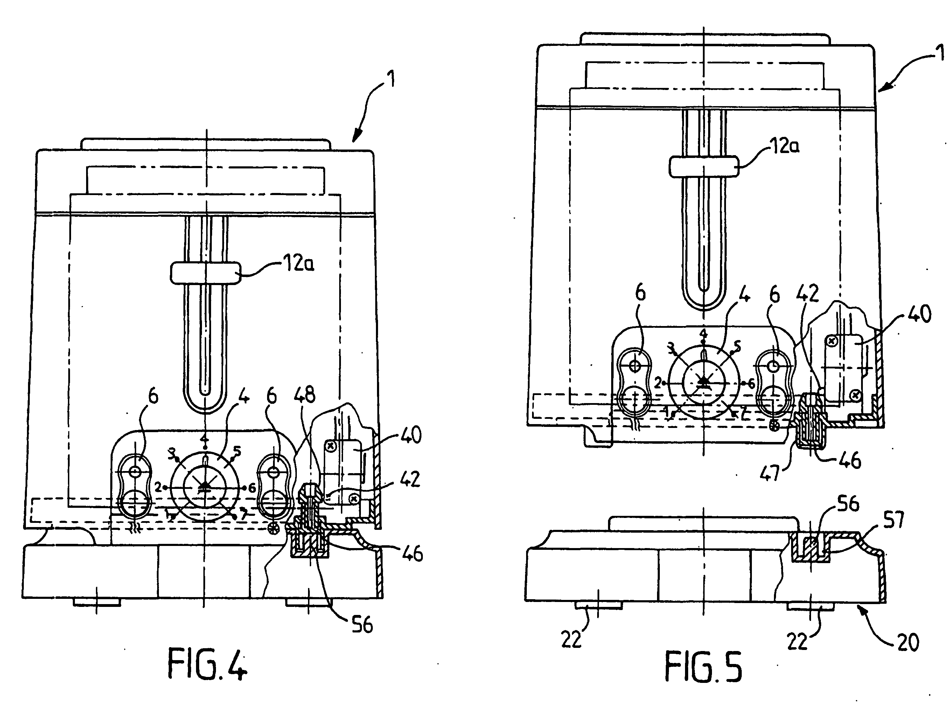

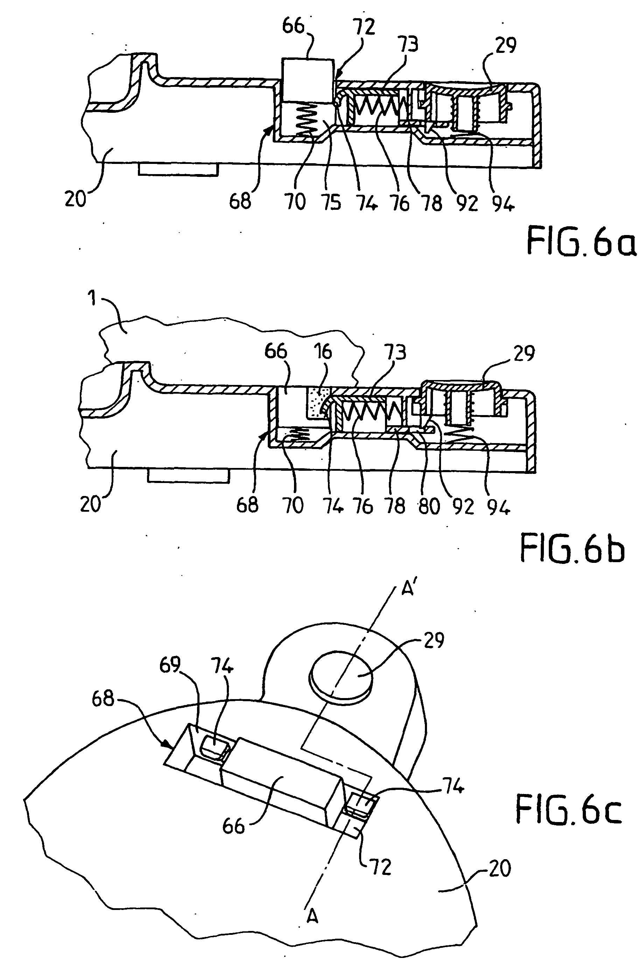

Dans un second mode de réalisation présenté aux figures 4 et 5, le dispositif de sécurité est un interrupteur électrique 40 lié au boîtier ou au bâti et comportant un contacteur 42. Un pion mobile 46 dans un logement 47 issu du boîtier ou du bâti est positionné au voisinage immédiat du contacteur 42. Ce pion est mobile verticalement et possède un embout conique 48 susceptible d'interagir avec le contacteur lorsque le pion est déplacé vers le haut. Avantageusement, le logement 47 est un des pieds du boîtier, tel le pied 19 présenté figure 1 et permettant de reposer le grille-pain sur le plan de travail lorsque le socle et le boîtier sont séparés.

Par ailleurs, le socle 20 possède un logement 57 au centre duquel est positionné un doigt 56. Le logement 57 est susceptible d'accueillir le logement 47 du pion 46, le doigt 56 permettant de déplacer verticalement le pion 46.

Ainsi, lorsque le boîtier est positionné sur le socle, le doigt 56 pousse le pion 46 vers le haut, ce qui provoque l'interaction du cône 48 avec le contacteur 42 de l'interrupteur 40, autorisant ainsi les éléments chauffants à être alimentés lorsqu'un cycle de grillage sera initialisé (par exemple par la descente du chariot porte pain en position basse). Lors du retrait du boîtier du socle, le pion 46 revient, par gravité et/ou à l'aide d'un ressort de rappel, à sa position d'origine, où le cône 48 n'agit plus sur le contacteur 42, l'interrupteur 40 ouvrant le circuit électrique d'alimentation des éléments chauffants.

Les figures 6a, 6b et 6c présentent, en détail, un mécanisme de verrouillage du boîtier sur le socle tel que précédemment évoqué.

Ainsi, le socle comporte un bouton de commande 29 mobile verticalement contre la force de rappel d'un ressort 94. Ce bouton possède avantageusement une partie saillante verticale 92 dirigée vers le bas, dont l'un des bords est biseauté.

Le socle comporte par ailleurs au moins une pièce 73 coulissant horizontalement contre la force de rappel d'un ressort 76. A l'une de ses extrémités, la pièce possède un ergot 74. A son extrémité opposée, la pièce possède une extension plane horizontale 78 munie d'une ouverture 80. Avantageusement, le socle comporte deux pièces 73, l'extension plane horizontale pouvant être commune en reliant transversalement les deux pièces 73. Ces deux pièces sont disposées de façon symétrique par rapport au bouton de commande 29, tel qu'il est bien visible figure 6c.

Par ailleurs, indépendamment de ce système de verrouillage, le socle possède un poussoir 66 mobile verticalement dans un logement 68 définissant un volume 75, contre la force de rappel d'un ressort 70. Ce poussoir est disposé entre les deux ergots 74 de telle sorte que la paroi 69 du logement 68 s'étende au moins jusqu'aux ergots 74, permettant à ces derniers de pouvoir coulisser dans le volume 75.

De plus, le poussoir 66 peut coulisser au travers d'une ouverture 72 réalisée dans la face supérieure du socle.

Le fonctionnement de ce dispositif est le suivant. Lorsque le boîtier est disposé sur le socle, le poussoir 66 est enfoncé sous le poids du boîtier, contre la force du ressort 70, et la position des différents éléments est représentée par la figure 6b.

Le ressort 76 est libre dans son mouvement horizontal, de sorte que l'interaction du crochet 16 avec l'ergot 74, dans un premier temps comprime le ressort 76 avant que ce dernier ne vienne verrouiller l'ergot 74 sur la partie plane du crochet 16.

Lorsque l'utilisateur désire déverrouiller le boîtier du socle, il appuie verticalement sur le bouton 29, représenté par la figure 6a. La partie saillante 92 interagit alors avec le bord de l'ouverture 80 de l'extension 78, comprimant le ressort 76, jusqu'à la suppression de l'interaction entre l'ergot 74 et le crochet 16. Ceci provoque la détente du ressort 70 aidant à la séparation du boîtier du socle.

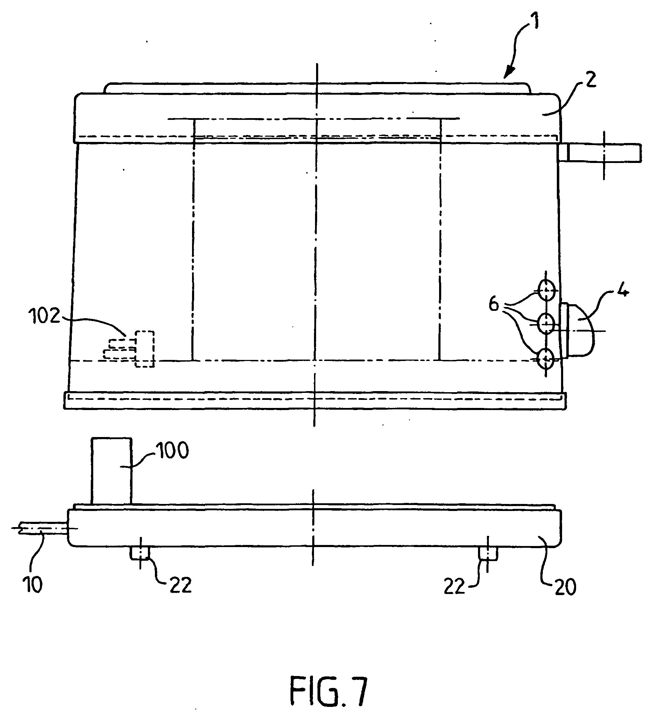

Dans la version présentée à la figure 7, le socle 20 comporte l'alimentation électrique des éléments chauffants et notamment le cordon 10 de liaison au réseau. Les fils électriques de ce cordon sont reliés à des fiches contenues dans un connecteur 100. Dans le boîtier est disposé un connecteur complémentaire 102 relié au circuit d'alimentation électrique des éléments chauffants. De tels connecteurs complémentaires sont largement utilisés notamment dans les appareils de chauffage de l'eau de type bouilloire et comportent les sécurités nécessaires pour éviter tout accès aux parties susceptibles d'être sous tension.

## Revendications

1. Grille-pain (1) comprenant un boîtier (2) comportant notamment des parois latérales d'habillage du grille-pain, un socle (20) en liaison avec le boîtier (2), ledit boîtier contenant un bâti formant une chambre de grillage (8) verticale ouverte, d'une part dans la partie supérieure du boîtier (2), et d'autre part dans la partie inférieure du boîtier, en direction du socle, ladite chambre étant munie de moyens de chauffe situés à proximité de la chambre de grillage (8) et reliés à un dispositif d'alimentation électrique et de contrôle (4, 6) desdits éléments chauffants, le socle (20) étant amovible du boîtier (2), **caractérisé en ce que** le socle (20) et le boîtier (2) comportent chacun un élément (46, 56, 100, 102, 160, 260) en interaction l'un avec l'autre lorsque le boîtier (2) est disposé sur le socle (20), la suppression de cette interaction par le retrait du boîtier (2) du socle (20) empêchant l'alimentation électrique des éléments chauffants.

2. Grille-pain (1) selon la revendication précédente, **caractérisé en ce que** le socle (20) comporte une zone (9) en creux de collecte des miettes, ladite zone étant localisée en regard de la chambre de chauffe lorsque le boîtier (2) est disposé sur le socle (20).

3. Grille-pain (1) selon la revendication 1, **caractérisé en ce que** l'élément (160) disposé dans le boîtier (2) peut occuper deux positions selon que le boîtier (2) est disposé ou non sur le socle (20), l'une de ces positions étant localisée sur le trajet du chariot porte pain ou d'une pièce mobile (13) avec ledit chariot en empêchant ce dernier d'atteindre la partie basse du grille-pain (1), lorsque le boîtier (2) est retiré du socle (20).

4. Grille-pain (1) selon la revendication 1, **caractérisé en ce que** l'élément disposé dans le socle (20) est un doigt (46, 56), l'élément disposé dans le boîtier étant un interrupteur électrique (40) inséré dans le circuit électrique d'alimentation des éléments chauffants.

5. Grille-pain (1) selon la revendication précédente, **caractérisé en ce que** l'interrupteur (40) se présente sous la forme d'un contacteur (42) ouvrant le circuit d'alimentation des éléments chauffants dès que le socle (20) est séparé du boîtier (2).

6. Grille-pain (1) selon l'une des revendications précédentes, **caractérisé en ce que** le socle (20) comporte un connecteur électrique (100) relié à une prise électrique pour sa connexion au réseau électrique, le connecteur (100) étant de type mâle ou femelle et coopérant, lorsque le boîtier (2) est disposé sur le socle (20), avec une partie complémentaire (102) femelle ou mâle disposée sur le bâti ou le boîtier (2) du grille-pain (1) et reliée électriquement aux éléments chauffants.

7. Grille-pain (1) selon l'une des revendications précédentes, **caractérisé en ce que** le circuit d'alimentation des éléments chauffants comporte une gâchette électrique verrouillant le boîtier (2) sur le socle (20) lorsque les éléments chauffants sont alimentés.

## Claims

1. A toaster (1) comprising a case (2) having in particular side walls for covering the toaster, a stand (20) associated with the case (2), said case containing a structure forming a vertical toasting chamber (8) that is open firstly into the top portion of the case (2) and secondly into the bottom portion of the case, going towards the stand, said chamber being provided with heater means situated close to the toasting chamber (8) and connected to an electrical device (4, 6) for powering and controlling said heater elements, the stand (20) being removable from the case (2), the toaster being **characterized in that** the stand (20) and the case (2) include respective elements (46, 56, 100, 102, 160, 260) for interacting with each other when the case (2) is placed on the stand (20), with the elimination of such interaction by removing the case (2) from the stand (20) preventing the heater elements being electrically powered.

2. A toaster (1) according to the preceding claim, **characterized in that** the stand (20) includes a hollow zone (9) for collecting crumbs, said zone being located facing the heater chamber when the case (2) is placed on the stand (20).

3. A toaster (1) according to claim 1, **characterized in that** the element (160) placed in the case (2) can occupy two positions depending on whether the case (2) is or is not in place on the stand (20), one of these positions being located on the path of the bread carriage or of a part (13) that moves together with the carriage, serving to prevent the carriage from reaching the low portion of the toaster (1) when the case (2) is separate from the stand (20).

4. A toaster (1) according to claim 1, **characterized in that** the element placed in the stand (20) is a finger (46, 56), the element placed in the case being an electric switch (40) inserted in the electrical circuit for powering the heater elements.

5. A toaster (1) according to the preceding claim, **characterized in that** the switch (40) is in the form of a contactor (42) opening the circuit for powering the heater elements as soon as the stand (20) is separated from the case (2).

6. A toaster (1) according to any preceding claim, **characterized in that** the stand (20) includes an electrical connector (100) connected to an electric plug for connection to mains, the connector (100) being of the male or female type and co-operating, when the case (2) is placed on the stand (20), with a complementary, female or male, portion (102) placed on the structure or the case (2) of the toaster (1) and electrically connected to the heater elements.

7. A toaster (1) according to any preceding claim, **characterized in that** the circuit for powering the heater elements includes an electrical catch for locking the case (2) to the stand (20) while the heater elements are powered.

## Patentansprüche

1. Toaster (1) mit einem Gehäuse (2), das insbesondere seitliche Wände zur Verkleidung des Toasters aufweist, einen Sockel (20), der mit dem Gehäuse (2) verbunden ist, wobei das Gehäuse ein Gestell enthält, das eine senkrechte Röstkammer (8) bildet, die zum einen zum oberen Teil des Gehäuses (2) und zum anderen zum unteren Teil des Gehäuses zum Sockel hin geöffnet ist, wobei die Kammer mit Heizmitteln versehen ist, die in der Nähe der Röstkammer (8) angeordnet und mit einer Vorrichtung zur elektrischen Versorgung und Steuerung (4, 6) der Heizelemente verbunden sind, wobei der Sockel (20) von dem Gehäuse (2) abgenommen werden kann, **dadurch gekennzeichnet, dass** der Sockel (20) und das Gehäuse (2) jeweils ein Element (46, 56, 100, 102, 160, 260) aufweisen, zwischen denen eine Wechselwirkung besteht, wenn das Gehäuse (2) auf dem Sockel (20) angeordnet ist, wobei das Aufheben dieser Wechselwirkung durch das Abnehmen des Gehäuses (2) von dem Sockel (20) die elektrische Versorgung der Heizelemente verhindert.

2. Toaster (1) nach dem vorhergehenden Anspruch, **dadurch gekennzeichnet, dass** der Sockel (20) einen vertieften Bereich (9) zum Auffangen der Krümel aufweist, wobei der Bereich der Heizkammer gegenüber liegt, wenn das Gehäuse (2) auf dem Sockel (20) angeordnet ist.

3. Toaster (1) nach Anspruch 1, **dadurch gekennzeichnet, dass** das im Gehäuse (2) angeordnete Element (160) zwei Positionen einnehmen kann, je nachdem, ob das Gehäuse (2) auf dem Sockel (20) angeordnet ist oder nicht, wobei sich eine dieser Positionen im Weg des Brothalterschlittens oder eines mit dem Schlitten bewegbaren Teils (13) befindet und dabei der Schlitten daran gehindert wird, den unteren Teil des Toasters (1) zu erreichen, wenn das Gehäuse (2) von dem Sockel (20) abgenommen ist.

4. Toaster (1) nach Anspruch 1, **dadurch gekennzeichnet, dass** das im Sockel (20) angeordnete Element ein Zapfen (46, 56) ist, wobei das im Gehäuse angeordnete Element ein elektrischer Schalter (40) ist, der in den Stromkreis zur Versorgung der Heizelemente eingesetzt ist.

5. Toaster (1) nach dem vorhergehenden Anspruch, **dadurch gekennzeichnet, dass** der Schalter (40) die Form eines Kontaktgebers (42) aufweist, der den Stromkreis zur Versorgung der Heizelemente öffnet, sobald der Sockel (20) von dem Gehäuse (2) getrennt ist.

6. Toaster (1) nach einem der vorhergehenden Ansprüche, **dadurch gekennzeichnet, dass** der Sockel (20) ein elektrisches Verbindungsstück (100) aufweist, das für den Anschluss an das Stromnetz mit einer elektrischen Steckverbindung verbunden ist, wobei das Verbindungsstück (100) ein Stecker oder eine Buchse ist und mit einem komplementären Buchsen- bzw. Steckerteil (102) zusammenwirkt, der am Gestell oder am Gehäuse (2) des Toasters (1) angeordnet und mit den Heizmitteln elektrisch verbunden ist, wenn das Gehäuse (2) auf dem Sockel (20) angeordnet ist.

7. Toaster (1) nach einem der vorhergehenden Ansprüche, **dadurch gekennzeichnet, dass** der Stromkreis zur Versorgung der Heizelemente ein elektrisches Schloss aufweist, das das Gehäuse (2) am Sockel (20) verriegelt, wenn die Heizelemente versorgt werden.
